Europäisches Patentamt

European Patent Office

Office européen des brevets

(19)

(11) Veröffentlichungsnummer : **0 053 236**
B1

# (12) EUROPÄISCHE PATENTSCHRIFT

(45) Veröffentlichungstag der Patentschrift :
13.03.85

(21) Anmeldenummer : 81107834.4

(22) Anmeldetag : 02.10.81

(51) Int. Cl.⁴ : **H 04 B   9/00**, H 04 Q 11/00,
H 04 M 11/06, H 04 N   7/00

(54) Dienstintegriertes digitales Übertragungssystem.

(30) Priorität : 27.11.80 DE 3044657

(43) Veröffentlichungstag der Anmeldung :
09.06.82 Patentblatt 82/23

(45) Bekanntmachung des Hinweises auf die Patenterteilung : 13.03.85 Patentblatt 85/11

(84) Benannte Vertragsstaaten :
AT CH DE FR GB LI NL SE

(56) Entgegenhaltungen :
EP-A- 0 020 878
EP-A- 0 051 725
US-A- 3 601 544
NTG-FACHBERICHTE, THE INTERNATIONAL SYM-
POSIUM ON SUBSCRIBER LOOPS AND SERVICES,
15.-19, September 1980, Seiten 46-50, München,
Berlin, DE., M. WELZENBACH et al.: "The application
of optical systems for cable tv"
PROCEEDINGS OF THE IEEE, Band 68, Nr. 10, Oktober 1980, Seiten 1291-1299, New York, U.S.A., K.Y.
CHANG: "Fiberguide systems in the subscribber
loop"
WISSENSCHAFTLICHE BERICHTE AEG-TELEFUN-
KEN, Band 53, Nr. 1-2, September 1980, Seiten 72-79,
Berlin, DE. H. SCHÜSSLER: "Dienstintegrierter Teilnehmeranschluss mit Lichtwellenleitern"

(73) Patentinhaber : ANT Nachrichtentechnik GmbH
Gerberstrasse 33
D-7150 Backnang (DE)

(72) Erfinder : Hauk, Waldemar, Dipl.-Ing.
Häfnersweg 104
D-7150 Backnang (DE)
Erfinder : Krull, Klaus, Ing. grad.
Kantstrasse 3
D-7153 Weissach i.T. (DE)
Erfinder : Welzenbach, Manfred, Dr.-Ing.
Lutherweg 39
D-7150 Backnang (DE)

(74) Vertreter : Schickle, Gerhard, Dipl.-Ing. et al
ANT Nachrichtentechnik GmbH Patent- und Lizenzabteilung Gerberstrasse 33
D-7150 Backnang (DE)

## Beschreibung

Die Erfindung betrifft ein dienstintegriertes digitales Übertragungssystem gemäß Oberbegriff des Anspruchs 1.

Ein solches System wird durch die EP-A-0 051 725, die am 19 5 82 veröffentlicht wurde, beschrieben.

Der Erfindung lag die Aufgabe zugrunde, ein dienstintegriertes digitales Übertragungssystem der obigen Art anzugeben, das die Übertragung von Schmal- und Breitbandkanälen über einen einzigen optischen Kanal derart gestattet, daß modularer Aufbau bzw. modulare Erweiterung des Systems möglich ist. Diese Modularität soll soweit ausgebildet sein, daß für den Übertragungsbetrieb der Schmalbandkanäle so wenig wie möglich Baugruppen notwendig sind, die möglichst wenig Energieverbrauch aufweisen. Zusätzlich soll bei dem genannten System bei Netzausfall ein eingeschränkter Betrieb, nämlich der der Schmalbandkanäle, für eine möglichst lange Unterbrechungszeit möglich sein. Das System soll weiterhin unter Einhaltung einer hohen Übertragungsqualität eine Reduzierung der Anforderungen an die optischen Bauelemente gestatten. Selbstverständlich soll das System außerdem in möglichst unaufwendiger Weise ausgebildet sein.

Die Lösung erfolgt mit den im Anspruch 1 gekennzeichneten Merkmalen.

Durch die DE-A-25 38 638 ist ein integriertes Nachrichtensystem für die Übertragung und Vermittlung von Bild, Ton und Daten bekanntgeworden, bei dem der Teilnehmeranschluß über zwei gesonderte Glasfasern an die zugehörige zentrale Vermittlungsstelle erfolgt, wobei die eine Faser zum Senden und die andere zum Empfangen von Fernsprech- und Videosignalen in Zeitmultiplextechnik benutzt werden. Wahlweise sind noch Videokoppelfelder für Bildkommunikation bzw. zur Vermittlung von Fernsehsignalen vorgesehen.

Durch die EP-A-0 020 878, veröffentlicht am 7 8 81, wird ein dienstintegriertes Nachrichtenübertragungs- und Vermittlungssystem für Ton, Bild und Daten vorgeschlagen, bei dem nur eine Lichtleitfaser für die Teilnehmeranschlußleitung verwendet wird und bei der wahlweise die Schmalbanddienste mittels Digitalübertragung und Multiplexbildung beim Teilnehmer und/oder die Breitbanddienste mittels analoger Übertragung erfolgen. Bei diesem System wird für die Zweiwegeübertragung das Wellenmultiplexverfahren vorgeschlagen, was jedoch hohe Anforderungen an die optischen Sende- und Empfangselemente sowie an die Koppler bezüglich Übersprechdämpfung stellt.

Durch die EP-A-0 012 979 ist ein Verfahren zur Über agung mehrerer Signale über eine Lichtwellenleiterverbindung, insbesondere zwischen einer Zentrale und einem Teilnehmeranschluß, bekanntgeworden, bei dem Fernsehsignale, ein Bildfernsprechsignal, Mono- bzw. Stereotonsignal und ein digitales Fernsprechsignal pulslagenmoduliert und zu einem Zeitmultiplexsignal vereinigt werden. Es wird ein Rahmenaufbau des zu übertragenden Zeitmultiplexsignals vorgeschlagen in Abhängigkeit von einem möglichst einfachen Multiplexer- und Demultiplexeraufbau sowie ein Rahmenaufbau, bei dem einem Impuls eines Unterkanals ein vergleichsweise größerer Zeithub zugemessen wird. Weiterhin wird vorgeschlagen, die Tonsignale zu einem Frequenzmultiplexsignal zu vereinigen und dieses ebenfalls in ein pulslagenmoduliertes Signal umzuformen.

In dem Aufsatz « Der Einsatz von optischen Systemen in Breitbandverteilanlagen » von Manfred Welzenbach und Bernhard Wiest in Wissenschaftliche Berichte, AEG-Telefunken, 53, (1980), 1-2, Seite 62 bis 71, ist in Figur 19 und zugehöriger Beschreibung ein Teilnehmeranschluß mit zwei Lichtwellenleitern für Breitbandverteilung und zusätzliche Schmal- und Breitbanddienste im Wellenlängen-Multiplex vorgeschlagen worden, wobei Breit- und Schmalbandsignale jeweils in einem getrennten optischen Kanal übertragen werden, wobei aber die Probleme der Stromversorgung und des modularen Aufbaus nicht diskutiert wurden.

Durch den Aufsatz « Fiberguide systems in the subscriber loop » von K. Y. Chang in Proceedings of the IEEE, Vol. 68, No. 10, Oktober 1980, ist ein optisches Kommunikationsnetz in Sternform bekanntgeworden, in dem zwei Fasern pro Teilnehmeranschluß verwendet und auf der einen Faser alle Signale in Senderichtung und auf der anderen Faser alle Signale in Empfangsrichtung übertragen werden (Figur 3 und 4). Aus Figur 5 ist ein solches Netz mit nur einer Faser mit Wellenlängenmultiplex zu entnehmen, wobei jedoch auch hier jeweils alle Signale in Hin- und Rückrichtung durch Multiplexer zusammengefaßt werden. Beide Systemvorschläge beziehen sich auf analoge Signalübertragung. Die Teilnehmereinrichtungen werden vom Stromnetz versorgt. Um wichtige Dienste wie Telefon und Alarmsignalisierung auch bei Netzausfall zu ermöglichen, wird eine Pufferbatterie bzw. ein metallisches Leiterpaar in der Teilnehmerleitung zur Versorgung derjenigen Teilnehmerbaugruppen vorgeschlagen, deren Betrieb hierfür erforderlich ist.

Durch die US-A-3 601 544 ist ein Übertragungssystem für Daten eines Magnetspeichers bekanntgeworden, wobei ein NRZ-Datensignal einmal mittels eines 3-wertigen Codierers umgesetzt und parallel dazu mittels eines 2-wertigen Codierers phasen- oder frequenzmoduliert wird. Die beiden Ausgangssignale werden mittels Filter im Frequenzmultiplex zusammengefaßt, übertragen und am Empfangsort mittels Filter wieder getrennt und durch entsprechende Decodierer decodiert. Dieses System gibt keinen Hinweis auf digitale Multiplexbildung von mehreren Schmal-und Breitbandsignalen und auch nicht auf optische Übertragung.

Das erfindungsgemäße Übertragungssystem weist ein modulares Aufbaukonzept auf und gestattet damit einen stufenweisen Ausbau, ausgehend von einer Schmal- oder Breitbandübertragung bei einer hohen Übertragungsqualität. Die Anzahl der und die Anforderungen an die optischen Systeme sind dabei reduziert. Aufgrund der Modularität des Systems ist es möglich, daß bei Netzausfall der Betrieb einer bestimmten Kanalgruppe für lange Zeit aufrechterhalten werden kann. Eine Synchronität zwischen Schmal- und Breitbandsignalen ist nicht erforderlich.

Es folgt nun die Beschreibung der Erfindung anhand der Figuren.

Figur 1 zeigt ein Blockschaltbild des erfindungsgemäßen Systems anhand eines Ausführungsbeispiels für das Leitungsendgerät bei einer zentralen Einrichtung.

Figur 2 zeigt ein ebensolches Blockschaltbild für das Leitungsendgerät bei einem Teilnehmer.

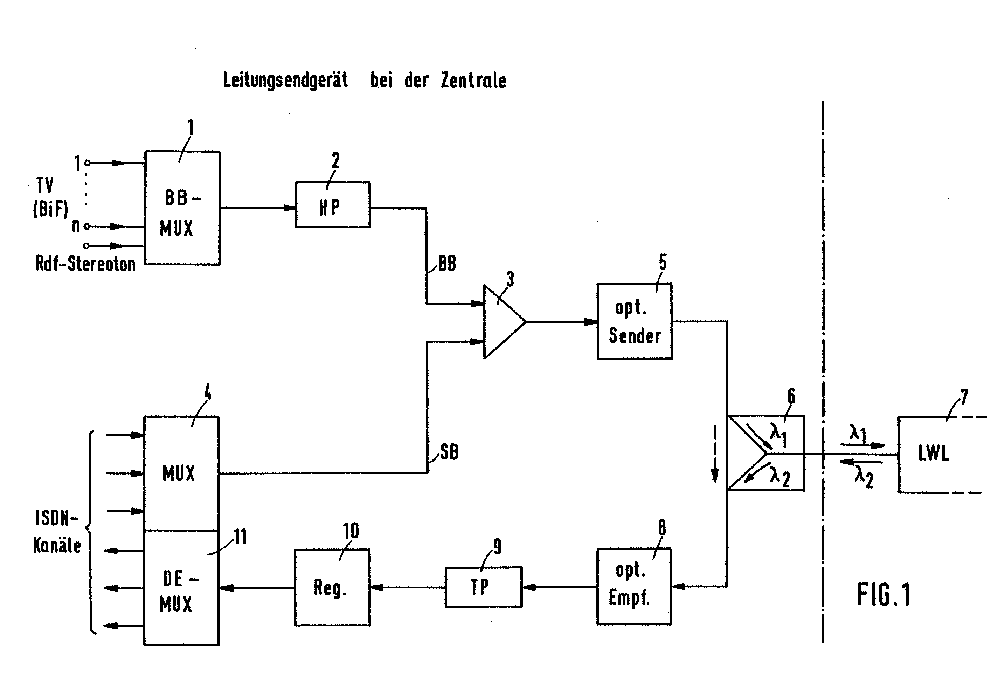

In Figur 1 ist links die getrennte Aufbereitung der Schmalbandkanäle (ISDN), die Fernsprechen, Telex, Faksimile usw. umfassen, durch einen Multiplexer MUX 4 bzw. durch einen Demultiplexer DEMUX 11 und die Aufbereitung der Breitbandkanäle, die Fernsehen, Tonrundfunkprogramme und Bildfernsprechen umfassen, durch den Breitbandmultiplexer 1 erkennbar. Die vom Schmalbandmultiplexer 4 abgegebenen digitalen Schmalbandsignale werden über einen Verstärker 3 auf den optischen Sender 5 gegeben, der über den Lichtwellenleiter 7 zum Teilnehmer sendet. Die Breitbandsignale TV1 ... n, Rundfunkstereoton usw. werden durch den Breitbandmultiplexer 1 in ein Signal hoher Bitrate gemultiplext, das über einen Hochpaß 2 auf den Verstärker 3 gelangt und dem Schmalbandmultiplexsignal frequenzmäßig überlagert ist. Die untere Grenzfrequenz des Hochpasses 2 ist größer als die Bitrate des Schmalbandmultiplexsignals zu wählen. Andererseits ist durch Wahl eines geeigneten Codes für die Breitbandsignale dafür zu sorgen, daß unterhalb dieser Grenzfrequenz möglichst wenig Leistung auftritt.

In der ankommenden Richtung gelangt das optische Signal über den Lichtwellenleiter 7 auf den optischen Empfänger 8, aus dessen Ausgangssignal über einen Tiefpaß 9 die Schmalbandsignale ausgefiltert werden, die anschließend in einem Regenerator 10 regeneriert und im anschließenden Demultiplexer 11 kanalweise getrennt werden. In dieser Ausgestaltung der Erfindung ist also ein Breitbandbetrieb in der Rückrichtung nicht vorgesehen. Nach einer vorteilhaften Ausgestaltung der Erfindung erfolgt die Zweiwegeübertragung mittels Wellenmultiplex, wobei in der Senderichtung mit einer Wellenlänge $\lambda 1$ und in der Empfangsrichtung mit einer Wellenlänge $\lambda 2$ gearbeitet wird. Zu diesem Zweck ist zwischen Lichtwellenleiter 7 und optischem Sender bzw. Empfänger ein Richtkoppler 6 eingefügt. Um das Nebensprechen noch weiter zu reduzieren und um die Anforderungen an den Entkopplungsgrad des Richtkopplers 6 zu reduzieren, wird die Empfangswellenlänge $\lambda 2 > \lambda 1$ gewählt und eine Fotodiode eingesetzt, deren Grenzwellenlänge größer $\lambda 1$ ist.

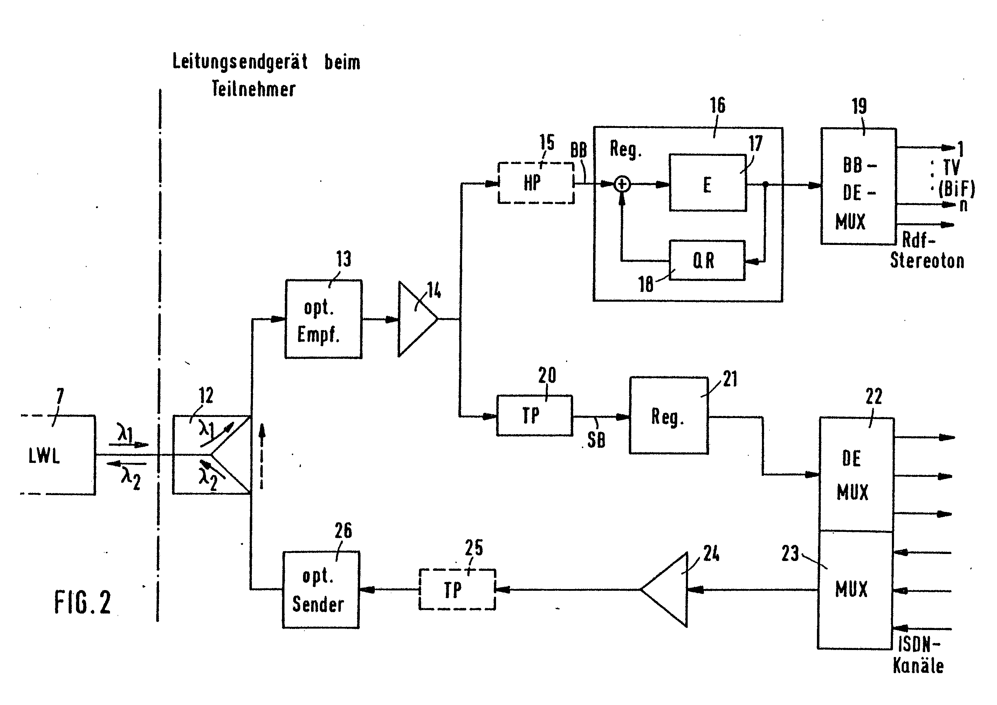

In Figur 2 gelangt das optische Signal von der Zentrale über den Lichtwellenleiter 7 auf den optischen Empfänger 13, dessen Ausgangssignal frequenzmäßig mittels Tiefpaß 20 in das Schmalbandmultiplexsignal SB bzw. Breitbandmultiplexsignal BB frequenzmäßig geteilt wird. Das Schmalbandmultiplexsignal SB wird in einem Regenerator 21 regeneriert und anschließend durch den Demultiplexer 22 in die einzelnen ISDN-Kanäle zerlegt. Das Breitbandmultiplexsignal gelangt über einen Hochpaß 15, der nicht unbedingt erforderlich ist, auf einen Regenerator 16 mit Entscheider 17 und quantisierter Rückkopplung 18 und anschließend regeneriert auf den Breitbanddemultiplexer 19, durch den die einzelnen Breitbandkanäle rückgewonnen werden. In der Senderichtung werden die ISDN-Kanäle des Teilnehmers über den Multiplexer 23 zusammengefaßt und auf einen Verstärker 24 gegeben, dessen Ausgangssignal über einen nicht unbedingt erforderlichen Tiefpaß 25 auf den optischen Sender 26 gegeben wird, der wiederum auf den Lichtwellenleiter 7 arbeitet. Zwischen Sender bzw. Empfänger und Lichtwellenleiter 7 ist entsprechend der Gegenseite ein Richtkoppler 12 eingefügt. Um diese Anforderungen an den Entkopplungsgrad zu ermäßigen, wird vorteilhafterweise für den optischen Empfänger 13 eine Fotodiode ausgesucht, die eine Bandpaßeigenschaft aufweist, wobei die obere Grenzwellenlänge kleiner $\lambda 2$ ist.

Die Filterschaltungen Hochpaß 15 bzw. Tiefpaß 25 sind für die grundsätzliche Wirkungsweise nicht erforderlich, sie ermöglichen jedoch eine höhere Dämpfung auf der Übertragungsstrecke und damit größere Feldlängen.

Die Zweiwegeübertragung ist nicht auf Wellenmultiplex beschränkt, sie kann entsprechend Unteranspruch 2 auch günstig mit dem Zeitgetrenntlageverfahren realisiert werden.

Besonders günstige Verhältnisse bezüglich des Realisierungsaufwandes der Tief- und Hochpässe, bezüglich der Übersprechdämpfung in den Kopplern 6 und 12 sowie bezüglich des notwendigen Dynamikbereichs der optischen Elemente ergeben sich jedoch dann, wenn eine Kombination aus Zeitgetrenntlageverfahren sowie Wellenlängenmultiplex gewählt wird.

Getrennte Multiplexbildung und Übertragung der Schmal- und Breitbandsignale ermöglichen den modularen Aufbau und die modulare Erweiterung des Systems, indem beispielsweise Breitbandmultiplexer und -demultiplexer für den Teilnehmer amts- bzw. teilnehmerseitig nur dann erforderlich sind, wenn letzterer an Breitbanddiensten interessiert ist. Schmalbandmultiplexer und -demultiplexer lassen sich wesentlich einfacher und auch leistungsärmer realisieren. Weiterhin ist von Vorteil, daß im Notbetrieb nur diejenigen Baugruppen mit Strom versorgt zu werden brauchen, die für die Aufrechterhaltung des Fernsprechdienstes erforderlich sind.

## Ansprüche

1. Dienstintegriertes System zur Übertragung digitaler Signale über einen Weg mit einem Frequenzübertragungsbereich, dessen obere Grenzfrequenz der maximalen Bitrate entspricht, wobei gleichzeitig digitale Signale mit unterschiedlichen Bitraten derart übertragen werden, daß für die Übertragung von digitalen Signalen mit hoher Bitrate im wesentlichen der obere Teil des Frequenzübertragungsbereichs und für solche mit kleiner Bitrate im wesentlichen der untere Teil des Frequenzübertragungsbereichs vorgesehen sind, wobei die digitalen Signale kleiner Bitrate Schmalband- und solche hoher Bitrate Breitbandsignale sind, dadurch gekennzeichnet, daß sendeseitig die einzelnen Schmal- und Breitbandsignale jeweils durch einen Multiplexer (4, 1) zu einem Schmal- (SB) und einem Breitbandmultiplexsignal (BB) zusammengefaßt werden, daß das Schmalbandmultiplexsignal (SB) durch frequenzmäßige Unterlagerung mit dem Breitbandmultiplexsignal (BB) zu einem Multiplexsignal additiv vereinigt wird, das mittels eines optischen Senders (5) über einen Lichtwellenleiter (7) übertragen und durch einen optischen Empfänger (13) empfangen wird, und daß auf·der Empfangsseite das Multiplexsignal frequenzmäßig geteilt und jeweils mittels eines Demultiplexers (22, 19) in die Schmal- bzw. Breitbandsignale umgesetzt wird.

2. Übertragungssystem nach Anspruch 1, gekennzeichnet durch Anwendung des Zeitgabel-(Burst-)Verfahrens bei der Zweiwegeübertragung über den Lichtwellenleiter (7).

3. Übertragungssystem nach Anspruch 1 oder 2, gekennzeichnet durch Anwendung des Wellenmultiplexverfahrens bei der Zweiwegeübertragung über den Lichtwellenleiter (7).

4. Übertragungssystem einem der vorhergehenden Ansprüche, dadurch gekennzeichnet, daß die frequenzmäßige Unterlagerung bzw. frequenzmäßige Teilung mittels Hoch- (2, 15) und/oder Tiefpässen (20 ; 25, 9) erfolgt.

5. Übertragungssystem nach Anspruch 3, dadurch gekennzeichnet, daß an beiden Enden des Lichtwellenleiters (7) ein optischer Koppler (6, 12) vorgesehen ist und jeweils der optische Empfänger (13 ; 8) für die Wellenlänge des optischen Senders (26 ; 5) eine möglichst niedrige Empfindlichkeit aufweist.

6. Übertragungssystem nach einem der vorhergehenden Ansprüche, dadurch gekennzeichnet, daß empfangsseitig zwischen dem optischen Empfänger (13, 8) und dem Demultiplexer (19, 22 ; 11) ein Regenerator (16, 21 ; 10) vorgesehen ist.

7. Übertragungssystem nach Anspruch 6, dadurch gekennzeichnet, daß der Regenerator (16) für die Breitbandmultiplexsignale (BB) mit quantisierter Rückkopplung arbeitet.

8. Übertragungssystem zwischen einem Teilnehmer und einer Zentrale, wobei die teilnehmerseitigen Übertragungseinrichtungen vom örtlichen Netz mit Strom versorgt werden, nach einem der vorhergehenden Ansprüche, dadurch gekennzeichnet, daß die für die Übertragung der Schmalbandsignale erforderlichen teilnehmerseitigen Übertragungseinrichtungen (13, 14, 21, 22, 24, 26) bei Netzausfall von einer Pufferbatterie mit Strom versorgt werden.

9. Übertragungssystem nach einem der vorhergehenden Ansprüche, dadurch gekennzeichnet, daß im optischen Sender (5 ; 26) eine lichtemittierende Diode verwendet wird.

## Claims

1. Service-integrated system for the transmission of digital signal over a path with a frequency transmission range, the upper limit frequency of which corresponds to the maximum bit rate, wherein digital signals of different bit rates are transmitted simultaneously in such a manner that substantially the upper part of the frequency transmission range is provided for the transmission of digital signals of high bit rate and substantially the lower part of the frequency transmission range is provided for such of small bit rate, wherein the digital signals of small bit rate are narrow band signals and such of high bit rate are wide band signals, characterised thereby, that the individual narrow and wide band signals are combined at the transmitting end each through a respective multiplexer (4, 1) into a narrow band multiplex signal (SB) and a wide band multiplex signal (BB), that the narrow band multiplex signal (SB) is additively united with the wide band multiplex signal (BB) through subordination in terms of frequency into a multiplex signal which is transmitted by means of an optical transmitter (5) through a light wave conductor (7) and received through an optical receiver (13), and that the multiplex signal is divided in terms of frequency at the receiving end and translated by means of a respective demultiplexer (22, 19) into the narrow and wide band signals.

2. Transmission system according to claim 1, characterised by application of the time fork (burst) method in the two-way transmission through the light wave conductor (7).

3. Transmission system according to claim 1 or 2, characterised by application of the wave multiplex method in the two-way transmission through the light wave conductor (7).

4. Transmission system according to one of the preceding claims, characterised thereby, that the subordination or division in terms of frequency takes place by means of high pass filters (2, 15) and/or low pass filters (20 ; 25, 9).

5. Transmission system according to claim 3, characterised thereby, that an optical coupler (6, 12) is provided at both ends of the light wave conductor (7) and the optical receiver (13 ; 8) each time displays a lowest possible sensitivity for the wavelength of the optical transmitter (26 ; 5).

6. Transmission system according to one of the preceding claims, characterised thereby, that a regenerator (16, 21 ; 10) is provided between the optical receiver (13, 8) and the demultiplexer (19, 22 ; 11) at the receiving end.

7. Transmission system according to claim 6, characterised thereby, that the regenerator (16) operates with quantised feedback for the wide band multiplex signals (BB).

8. Transmission system between a subscriber and an exchange, wherein the transmission equipments at the subscriber end are supplied with current from the local mains, according to one of the preceding claims, characterised thereby, that the transmission equipments (13, 14, 21, 22, 24, 26) at the subscriber end required for the transmission of the narrow band signal are supplied with current from a buffer battery in case of mains failure.

9. Transmission system according to one of the preceding claims, characterised thereby, that a light-emitting diode is used in the optical transmitter (5 ; 26).

**Revendications**

1. Système avec intégration des services pour la transmission des signaux numériques par un trajet comportant une plage de transmission en fréquence, dont la fréquence limite supérieure correspond au débit binaire maximum, étant précisé que les signaux binaires à débit binaire différent sont transmis simultanément de façon telle que pour la transmission de signaux numériques à débit binaire élevé, c'est essentiellement la partie supérieure de la plage de transmission en fréquence qui est prévue et pour ceux de débit binaire faible, c'est essentiellement la partie inférieure de la plage de transmission en fréquence qui est prévue, étant précisé que les signaux numériques de faible débit binaire sont des signaux à bande étroite et que les signaux numériques de débit binaire élevé sont des signaux en bande large, caractérisé en ce que, du côté émission, les différents signaux en bande étroite et en bande large sont respectivement regroupés, au moyen d'un multiplexeur (4, 1) pour donner un signal multiplex en bande étroite (SB) et un signal multiplex en bande large (BB) ; en ce que le signal multiplex en bande étroite (BB) est réuni additivement, par superposition en fréquence, avec le signal multiplex en bande large (BB) pour donner un signal multiplex qui est transmis au moyen d'un émetteur optique (5) par l'intermédiaire d'un guide d'ondes lumineuses (7) et qui est reçu par un récepteur optique (13) ; et en ce que, du côté réception, le signal multiplex est divisé en fréquence est respectivement converti, au moyen d'un démultiplexeur (22, 19) en les signaux en bande étroite et les signaux à bande large.

2. Système de transmission selon la revendication 1, caractérisé par l'emploi du procédé de faisceaux d'impulsions séparés dans le temps lors de la transmission bidirectionnelle par l'intermédiaire du guide d'ondes lumineuses (7).

3. Système de transmission selon la revendication 1 ou la revendication 2, caractérisé par l'emploi du procédé de multiplexage en ondes lors de la transmission bidirectionnelle par l'intermédiaire du guide d'ondes lumineuses (7).

4. Système de transmission selon l'une des revendications précédentes, caractérisé en ce que la superposition en fréquence et la division en fréquence se font au moyen de filtres passe-haut (2, 15) et/ou passe-bas (20, 25, 9).

5. Système de transmission selon la revendication 3, caractérisé en ce qu'aux deux extrémités du guide d'ondes lumineuses (7) est prévu un coupleur optique (6, 12) et en ce que respectivement le récepteur optique (13, 8) présente une sensibilité la plus faible possible pour la longueur d'onde de l'émetteur optique (26, 5).

6. Système de transmission selon l'une des revendications précédentes, caractérisé en ce que du côté réception il est prévu entre le récepteur optique (13, 8) et le démultiplexeur (19, 22 ; 11) un régénérateur (16, 21 ; 10).

7. Système de transmission selon la revendication 6, caractérisé en ce que le régénérateur (16) pour les signaux multiplex à bande large (BB) travaille avec un couplage en retour quantifié.

8. Système de transmission entre un abonné et une centrale où les dispositifs de transmission côté abonné sont alimentés en courant électrique par le réseau local, selon l'une des revendications précédentes, caractérisé en ce que les dispositifs de transmission (13, 14, 21, 22, 24, 26) nécessaires côté abonné, sur la transmission des signaux en bande étroite sont alimentés en courant électrique, en cas de panne sur le réseau, par une batterie tampon.

9. Système de transmission selon l'une des revendications précédentes, caractérisé en ce que dans l'émetteur optique (5, 26) on emploie une diode émettrice de lumière.

Leitungsendgerät bei der Zentrale

FIG.1

0 053 236

FIG.2